# DEMANDE DE BREVET EUROPEEN

(11) **EP 1 157 922 A2**
(43) Date de publication de la demande: **28.11.2001**
(21) Numéro de dépôt: 01112207.4
(22) Date de dépôt: 17.05.2001
(51) Int. Cl.: B63B 5/24

(54) **Procédé pour solidariser les éléments d'une coque en résine armée**

(30) Priorité: 24.05.2000 FR 6717000
(71) Demandeur: Martinez, Jean Michel, 34280 Carnon (FR)
(72) Inventeur: Martinez, Jean Michel, 34280 Carnon (FR)

(57) **Abrégé**

L'invention concerne plus particulièrement un procédé pour la fabrication d'engins flottants, du type mettant en oeuvre une solidarisation définitive et étanche d'au moins deux demi-coquilles présentant une face interne et une face externe, notamment en matériau composite tel que résine armée, au moins une demi-coquille constituant la coque (2), au moins une seconde demi-coquille constituant la superstructure (1) de l'engin et le procédé est caractérisé par la succession des opérations suivantes : a) on réalise sur chacune des dites demi-coquilles (1, 2), lors de leur mise en forme, à proximité de leurs bords devant venir en contact, un premier repli (4, 4') vers la face interne (1b, 2b), suivi d'un second repli (5, 5') vers une direction opposée au corps de la demi-coquille concernée, la face externe (1a, 2a) de chaque demi-coquille conformant ainsi à proximité de son bord un épaulement ou échancrure en retrait vers l'intérieur, b) on met en contact les lèvres (1d, 2d) définies par les bords des deux demi-coquilles, chaque lèvre d'une demi-coquille venant en contact linéaire avec la lèvre de la demi-coquille opposée, les deux lèvres aboutées conformant une gorge en creux (6) s'ouvrant sur les faces externes des demi-coquilles et suivant le plan de joint commun aux deux demi-coquilles, c) on rapporte sur les deux lèvres (1d, 2d) juxtaposées et constituant le fond (7) de la dite gorge (6) un bandeau de tissu d'armature imprégné de résine (8) soumise à polymérisation in situ pour assurer la solidarisation des deux éléments par leurs lèvres aboutées ; d) on insère dans la dite gorge un corps longiforme (10) de section complémentaire de la dite gorge pour former un boudin de remplissage ou liston solidarisé dans sa gorge réceptrice.

Application à la fabrication d'embarcations en résine armée

## Description

La présente invention concerne le domaine technique de la fabrication d'engins flottants à partir de matériaux composites, notamment en résine armée.

Plus spécialement l'invention se rapporte à la fabrication d'engins flottants en résine armée intégrant un procédé d'assemblage et de solidarisation de deux feuilles préalablement mises en forme pour constituer chacune une demi-coquille, les deux demi-coquilles complémentaires l'une de l'autre devant conformer, après leur assemblage selon le plan de joint commun, un corps creux de faible densité, adapté par sa conformation à la sustentation stable et au déplacement sur l'eau.

On pratique de façon connue, à l'échelon artisanal ou industriel, la fabrication d'engins flottants constitués de deux demi-coquilles soit une coquille inférieure formant la coque immergée et une demi-coquille supérieure mise en forme pour définir les surfaces d'accueil des utilisateurs et les structures techniques de l'engin. Dans le cadre de la fabrication d'engins flottants, tels que canots, bateaux de plaisance ou de travail pour les métiers de la mer, il est courant comme indiqué ci-dessus de fabriquer, par exemple à partir de deux moules, deux demi-coquilles en résine armée, par exemple en résine polyester armée de fibres de verre, soit une demi-coquille formant la coque et une demi-coquille constituant la superstructure de l'engin. Il reste à superposer la structure supérieure et la solidariser sur la coque inférieure, les bords respectifs des deux demi-coquilles étant conformés pour venir en concordance, et l'on obtient un corps volumique creux étanche, adapté par le profil de sa coque à la navigation ou à la sustentation sur l'eau, la superstructure comportant les reliefs ou surfaces, tels que pont, banquettes, plat-bord, pour le confort des passagers et l'utilisation technique de l'engin.

Dans le cadre des méthodes connues on procède à l'assemblage de la demi-coquille superstructure et de la demi-coquille coque soit par emboîtement des bords d'une demi-coquille dans les bords de l'autre, soit par collage des lèvres superposées.

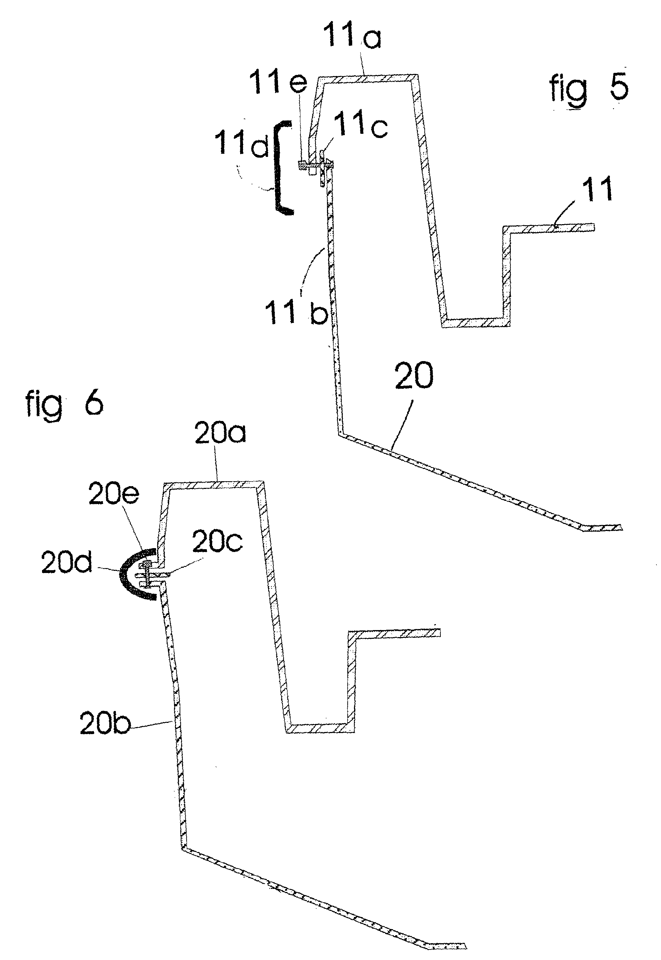

Dans le cas d'un emboîtement, tel que représenté à la figure 5, les bords des deux demi-coquilles coque 20, et superstructure 11, sont poncés sur leur bordures verticales et sont positionnés en chevauchement avec ajustement suivi d'un collage à partir de matériaux de liaisonnement appropriés 11c, selon les choix des constructeurs, et en fonction des tailles et de la robustesse requise. Les bords emboîtés 11a et 11b, sont en outre souvent rivetés en 11e, pour renforcer l'étanchéité ainsi que le calage et la solidarisation des pièces entre elles, et reçoivent le liston 11d.

Dans le cas de collage, illustré à la figure 6, les lèvres horizontales sont superposées venues de la superstructure 20a et de la coque 20b; la liaison est obtenue en positionnant les bords des demi-coquilles moulées face brute de la demi-coquille superstructure contre la face brute de la demi-coquille coque, ces bords superposés étant solidarisés par des colles composites 20c et souvent rivetées en 20e et le liston 20d chevauche l'ensemble.

Dans certains cas ces liaisons par emboîtage ou superposition, ou autre sont soudées par stratification des bordures des demi-coquilles moulées afin d'obtenir une meilleure solidité.

Cette méthode utilisant la stratification, c'est à dire la mise en place d'une bande d'armature imprégnée de résine rapportée et polymérisée sur place reste souvent d'application délicate car la possibilité d'atteindre les zones intérieures des demi-coquilles moulées est difficile. C'est le cas notamment en présence de demi-coquilles supérieures réalisant des superstructures sophistiquées et de configurations complexes, et dans lesquelles les formes sont contremoulées jusqu'au plancher.

Dés lors les liaisons par emboîtage ou superposition voient actuellement se réduire les possibilités de soudure interne par stratification, qui dans certaines formes architecturales sont en fait exclues. On en reste alors au collage et rivetage sans soudure par stratification, ce qui réduit considérablement la tenue des ensembles et la résistance mécanique de l'engin, appelé cependant par nature à subir des chocs en cours d'utilisation. Le résultat en est que l'étanchéité n'est pas sans faille, la rigidité est précaire et des déformations peuvent apparaître très souvent, voire dés le montage, sur les flancs des coques et ponts. Il en résulte un aspect présentant des ondulations disgracieuses que l'on ne réussit pas toujours à atténuer par la pause de listons traditionnels de profils divers ceinturant les cotés de la coque; ces listons ne sont pas faciles à poser et n'épousent pas toujours facilement les formes des flancs. En cas de dommages, même légers, les dits listons ne sont pas réparables et doivent être remplacés en entier.

On connaît également par le document de brevet GB 1 160 506 un procédé d'assemblage de panneaux sandwich pour la fabrication d'embarcation par stratification externe (apport d'une bande imprégnée de résine en cavalier sur les bords, légèrement évidés en épaisseur, des deux panneaux aboutés); mais ce procédé n'est pas prévu ni transposable pour l'assemblage de deux demi coques en résine armée de faible épaisseur, car il suppose des panneaux suffisamment épais (de type sandwich dans le document cité) pour permettre d'y creuser le logement récepteur du bandeau de soudure ; dans le cas de deux demi coques, le bandeau en surépaisseur tout au long du plan de joint serait particulièrement visible et inacceptable esthétiquement et laisserait subsister une zone exposée et très sensible aux chocs ; cette méthode n'offrirait d'ailleurs aucune prise pour le positionnement ferme du liston de protection ceinturant l'embarcation.

L'invention vise à pallier les inconvénients décrits : risques d'infiltration, défaut de rigidité et de finition, et elle permet une réparation rapide et peu coûteuse des dommages éventuels ou occasionnels au liston.

Selon un premier objet l'invention concerne un procédé d'assemblage de deux demi-coquilles assurant une jonction et une solidarisation étanche totalement sure entre les deux éléments assemblés.

Selon un autre objet le procédé de l'invention permet d'obtenir un renforcement mécanique important des bords ou bordés de l'engin flottant, améliorant de façon déterminante la résistance aux chocs de cette partie de l'embarcation.

Encore un autre objet de l'invention permettra d'assurer une meilleure protection des flancs de l'embarcation par la mise en place d'un bourrelet de protection contre les chocs à la fois plus efficace et de plus susceptible d'être réalisé à partir d'une pluralité d'éléments juxtaposés bout à bout, permettant par conséquent le remplacement individuel d'un élément isolé en cas d'avarie locale ou ponctuelle du bourrelet formant liston.

A cet effet l'invention concerne un procédé pour la fabrication d'engins flottants, du type mettant en oeuvre une solidarisation définitive et étanche de deux demi-coquilles sous forme de feuilles gauches présentant une face interne et une face externe, notamment en matériau composite tel que résine armée, une demi-coquille constituant la coque, une seconde demi-coquille constituant la superstructure de l'engin et le procédé est caractérisé par la succession des opérations suivantes : a) on réalise sur chacune des dites demi-coquilles, lors de leur mise en forme, à proximité de leurs bords devant venir en contact, un premier repli vers la face interne, suivi d'un second repli vers une direction opposée au corps de la demi-coquille concernée, la face externe de chaque demi-coquille conformant ainsi à proximité de son bord un épaulement ou échancrure en retrait vers l'intérieur, b) on met en contact les lèvres définies par les bords des deux demi-coquilles, chaque lèvre d'une demi-coquille venant en contact linéaire avec la lèvre de la demi-coquille opposée, les deux lèvres aboutées conformant une gorge en creux s'ouvrant sur les faces externes des demi-coquilles et suivant le plan de joint commun aux deux demi-coquilles, c) on rapporte sur les deux lèvres juxtaposées et constituant le fond de la dite gorge un bandeau de tissu d'armature imprégné de résine soumise à polymérisation in situ pour assurer la solidarisation des deux éléments par leurs lèvres aboutées ; d) on insère dans la dite gorge un corps longiforme de section complémentaire de la dite gorge pour former un boudin de remplissage solidarisé dans sa gorge réceptrice.

Avantageusement les échancrures pratiquées sur les bords respectifs de chacune des demi-coquilles devant venir en contact sont conformée s de telle sorte que les lèvres terminales soient en contact coplanaire, les deux lèvres se situant dans un même plan définissant le fond de la gorge.

De préférence les dits premier et second replis effectués sur les bords des deux demi-coquilles à solidariser sont à angle droit, la gorge définie par la juxtaposition des lèvres terminales des deux demi-coquilles ayant ainsi la forme d'un U sensiblement rectangulaire ouvert vers la face externe des demi-coquilles assemblées.

Selon un développement de l'invention on dispose, lors du moulage, à proximité de la lèvre d'une des deux demi-coquilles et sur la face interne de cette dernière au moins une cale débordant au-dessus de la lèvre terminale, cette cale étant apte à recevoir la face interne de la lèvre de l'autre demi-coquille et à l'immobiliser dans sa position de jonction correcte.

Selon un autre développement de l'invention, préalablement à la phase c) ci-dessus de mise en place du bandeau de stratification sur place, on procède à une préparation de surface du fond de la gorge, notamment par ponçage, par mise en place d'une ponceuse à bande ou autre engagée dans la gorge, la bande de ponçage reposant sur le fond de la dite gorge préalablement amenée en position sensiblement horizontale, les deux bords latéraux de la gorge, alors en position verticale définissant des rails ou glissières de guidage de déplacement de la bande.

De préférence le bandeau d'armature est formé d'un tissu tissé à maille carré, présentant une résistance bidirectionnelle.

Selon une réalisation de l'invention le corps longiforme inséré dans la gorge est lui-même réalisé en résine armée.

Et plus spécialement ce corps longiforme présente une section en U de dimensions convenables pour être engagé par sa face ouverte dans la gorge, la base du U refermant cette dernière.

L'invention au-delà du procédé concerne le produit nouveau obtenu par la mise en oeuvre de ce procédé et plus spécialement un engin flottant caractérisé en ce qu'il est constitué de deux demi-coquilles assemblées par leur plan de joint, les lèvres définissant les bords aboutés des deux demi-coquilles comportant chacune une échancrure vers l'intérieur à proximité du plan de joint, les lèvres respectives venues de chacune des deux demi-coquilles étant aboutées coplanairement, les échancrures jumelées des deux demi-coquilles définissant ensemble une gorge qui ceinture l'engin flottant, le plan de joint se situant dans le fond de la dite gorge, et les dites lèvres conformant ensemble le fond de la gorge sont solidarisées par un bandeau de résine armée stratifié sur le fond de la dite gorge.

Et plus particulièrement la gorge contient un corps longiforme conformant bourrelet et de section complémentaire de la dite gorge, le corps venant en outre en débordement par rapport au bordé de l'engin flottant en constituant un liston de protection contre les chocs.

Et facultativement la dite ceinture de protection est formée d'une pluralité d'éléments longiformes juxtaposés bout à bout et individuellement amovibles.

D'autres caractéristiques et avantages de l'invention ressortiront de la description qui suit et qui est donnée en rapport avec une forme de réalisation préférentielle donnée à titre d'exemple non limitatif et se référant à une application plus particulière de l'invention adaptée à la réalisation d'engins flottants ou embarcations légères, du type barque, canot, voilier notamment de plaisance, bateaux de pèche ou analogues.

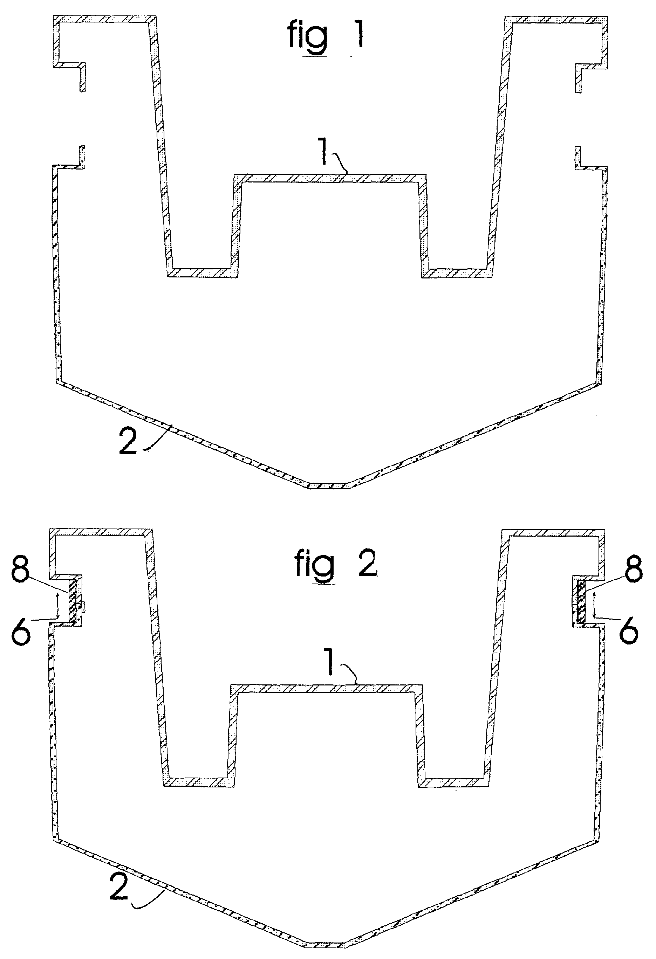

Dans les dessins annexés, la figure 1 représente une vue des deux demi-coquilles devant conformer l'embarcation en position superposées, avant assemblage.

La figure 2 représente les deux demi-coquilles après assemblage.

La figure 3 représente une vue de détail de la zone d'assemblage des deux demi-coquilles, les éléments étant séparés, tandis que la figure 4 représente la même vue après mise en place et réalisation de la solidarisation. Les figures 5 et 6 montrent les réalisations selon les méthodes antérieures

Selon l'ensemble des figures, on voit que l'embarcation réalisée dans le cadre de la mise en oeuvre de l'invention est constituée d'une demi-coquille inférieure 1 ouverte vers le haut, formant la coque et d'une demi-coquille supérieure 2 ouverte vers le bas, formant la superstructure.

Chaque demi-coquille peut-être réalisée chacune individuellement à partir d'un ou plusieurs moule sur lequel est appliquée la résine stratifiée soumise à durcissement par polymérisation et épousant, de façon connue, la forme du moule . Les demi-coquilles sont prévues pour que leurs bords latéraux, épousent une direction sensiblement verticale, orientée vers le bas depuis la demi-coquille supérieure et vers le haut depuis la demi-coquille inférieure ; les bords venus de chacune des demi-coquilles venant en concordance avec les bords de la demi-coquille opposée.

Chaque demi-coquille comporte donc une face extérieure 1a, 2a, et une face interne 1b, 2b, cette face interne orientée vers le volume intérieur est donc normalement inaccessible lorsque les deux demi-coquilles sont assemblées ; ces faces internes échappent à toute possibilité de travail en vue de la solidarisation par exemple par stratification interne des deux demi-coquilles superposées, sauf à percer des ouvertures dans une demi coquille, ce qui ne permet pas un travail aisé, affaiblirait la résistance mécanique de l'ensemble et nuirait à son esthétique.

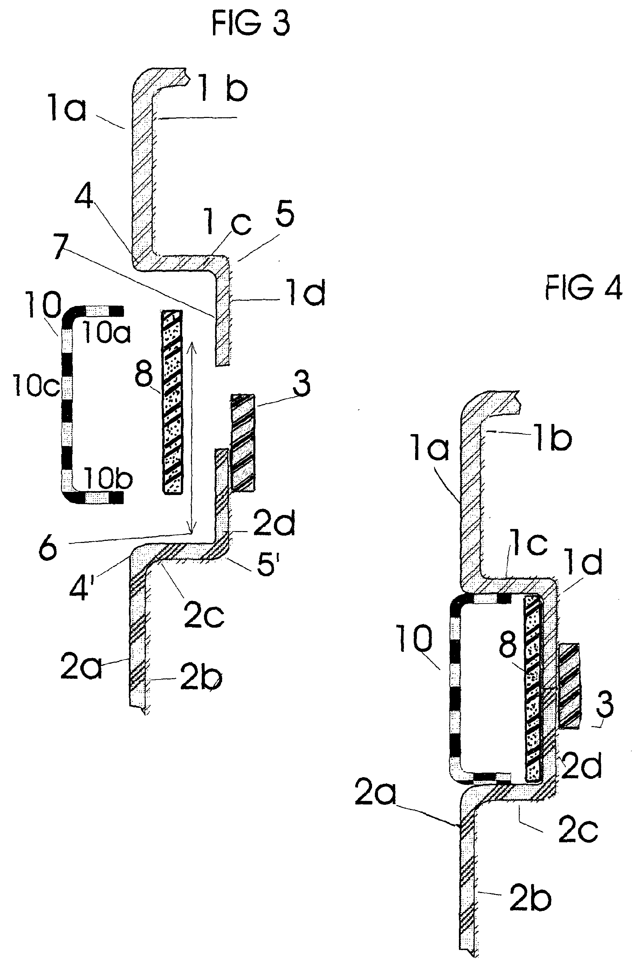

Selon l'invention et comme on le voit plus spécialement sur les figures 3 et 4, les bords verticaux des deux demi-coquilles présentent un repli 4 de la feuille conformant ce bord, repli orienté vers la face interne, donc vers l'intérieur de la structure ; repli de préférence à 90° ; ce premier repli 4 est suivi d'un second repli 5, de préférence également à 90°, orientant le bord de la feuille formant la demi-coquille concernée en direction du bord de la demi-coquille opposée.

Ces replis définissant sur les bords de chaque demi-coquille une échancrure, sont opérés lors de l'étape de fabrication par moulage des deux demi-coquilles ; et le recours à deux moules, ou plus, lors de la fabrication de chaque demi coquille permettra le démoulage ; chaque demi-coquille étant, comme connu en soi réalisée sous forme d'une seule pièce.

Le bord de chaque demi-coquille devant venir en concordance avec le bord de la demi coquille opposée présente donc un épaulement vers l'intérieur 1c, 2c, formé du premier repli 4, 4', suivi, au delà du second repli 5, 5', de la lèvre terminale 1d, 2d, appelée à venir en contact avec la lèvre de la demi-coquille opposée.

Pour faciliter la superposition rigoureuse, bord contre bord des lèvres 1d et 2d, et leur positionnement coplanaire, on a prévu sur une des lèvres, ici la lèvre de la demi-coquille inférieure 2d et plus spécialement sur la face interne de cette lèvre, une cale ou une pluralité de cales 3, convenablement espacées ; chaque cale déborde au-delà du bord de sa lèvre réceptrice sur laquelle elle est solidarisée par tous moyens, notamment par collage; ainsi cette cale peut recevoir la face interne de la lèvre venue de la demi-coquille opposée, de sorte que lors du positionnement de la demi-coquille supérieure sur la demi-coquille inférieure, la lèvre supérieure 1d vient reposer exactement sur la lèvre inférieure 2d et se situe dans le prolongement de cette dernière. La ligne de contact entre les deux lèvres définissant le plan de joint entre les deux demi-coquilles.

Après superposition des deux demi-coquilles on réalise un corps volumique creux, dont il reste cependant à assurer la solidarisation permanente, ce qui est l'objet de l'invention.

A cet effet, on prend en considération, selon les figures 3 et 4 la gorge en creux 6 constituée par les épaulements assemblés, venus des deux bords des deux demi-coquille ; cette gorge en creux ceinture le corps volumique obtenu par la superposition des deux demi-coquilles ; cette gorge présente une section en forme de U rectangulaire ouvert sur une face latérale du corps creux ; ici ouvert vers les cotés ou bordé de l'embarcation.
Le fond 7 de la gorge est constitué par les faces externes des lèvres respectivement 1d et 2d assemblés et se suivant dans le prolongement l'une de l'autre.

On commence par procéder au travail de surfaçage de ce fond 7 ; par exemple en orientant le corps creux, notamment l'embarcation de façon que le fond 7 de la gorge 6 soit disposé horizontalement ; le corps creux étant positionné et immobilisé sur un châssis pivotant selon un axe horizontal parallèle à l'axe longitudinal du corps volumique concerné et en cours de fabrication.

Un outil abrasif, tel qu'une ponceuse à bande ou autre, est positionné dans le fond de la gorge et effectue un travail de décapage du fond 7 ; la ponceuse à bande peut être activée automatiquement sans intervention manuelle ; partant d'une extrémité de la gorge, par exemple à la proue de l'embarcation, elle peut progresser étant guidée par les bords latéraux de la gorge (les flans 1c et 2c, alors en position verticale) jusqu'à la poupe, où un détecteur, tel un contacteur électrique, signale son arrivée et la fin du cycle.

Ce travail de surface du fond 7 de la gorge étant effectué, un bandeau d'armature 8, par exemple en tissu à résistance bidirectionnelle (du type connu sous l'appellation « roving ») notamment en fibre de verre imprégné de résine, est positionné sur le fond 7 de la gorge ; la polymérisation de la résine armée réalise la solidarisation par stratification in situ des deux lèvres 1d et 2d, assurant la liaison ferme et définitive des deux demi-coquilles assemblées ainsi selon leur plan de joint.

En phase finale un corps longiforme 10, par exemple à section en forme de U de dimensions complémentaires de celles de la gorge 6, est inséré dans la dite gorge pour conformer un bourrelet obturant la gorge à des fins décoratives ou de protection.

Ce bourrelet, dont les éléments successifs se suivent tout au long de la gorge ceinture donc le corps volumique creux ; les ailes 10a et 10b de chaque élément du dit bourrelet viennent en position d'engagement, par exemple à force, contre les replis respectifs 1c et 2c et sont solidarisés s'il y a lieu contre les dits replis sur lesquels ils prennent appui par collage.

La face externe du fond 10c du bourrelet, peut venir en arase affleurant au niveau des faces externes 1a et 2a des demi-coquilles, ce fond étant donc situé dans un plan prolongeant les cotés latéraux du corps volumique creux ; mais selon une variante ce bourrelet peut être dimensionné de façon à présenter son fond 10c en position de débordement par rapport aux flancs verticaux du corps volumique creux ; ce sera avantageusement le cas dans le cadre de la fabrication d'une embarcation comme selon l'exemple illustré dans les dessins annexé ; le bourrelet débordant constitue alors une ceinture non seulement esthétique, éventuellement par contraste de couleurs, mais un élément de protection constituant pare-choc ou liston et couramment utilisé dans la fabrication d'embarcation légère.

Ce liston, réalisé lui-même en résine armée, et de section en U, offre d'une part une forme de voûte opposant une forte résistance mécanique aux chocs orthogonaux à la paroi protégée, et d'autre part utilise un matériau particulièrement résistant. Il assure donc une excellente protection des flancs latéraux de l'embarcation.

Par ailleurs étant réalisé par éléments successifs juxtaposés bout à bout, le bourrelet ou liston dans le cas d'une embarcation, peut être réparé rapidement par simple remplacement limité à celui ou aux quelques éléments ayant subi une agression de détérioration.

L'invention offre donc une remarquable facilité dans la phase de solidarisation des deux demi-coquilles pour constituer le corps volumique creux recherché, puisque la zone de travail devant recevoir l'opération de stratification est aisément accessible sur les cotés extérieurs des deux demi-coquilles assemblées.

La réalisation de deux replis et d'un double épaulement dans la zone de jonction, située sur les cotés du corps, généralement exposés aux chocs, permet d'obtenir une structure renforcée et résistante, les épaulements conjugués pour constituer la gorge 6 jouent ainsi le rôle de nervures de raidissement, s'opposant à une déformation et à un enfoncement de la paroi latérale du corps creux en cas de choc. La présence du bourrelet rapporté 10 indépendamment de sa résistance propre renforce encore les nervures de raidissement en assurant et accroissant leur inertie.

L'opération de stratification du bandeau 8 dans une zone en retrait protégée procure une parfaite étanchéité entre les bords des deux demi-coquilles et assure donc un usage fiable soit que le corps creux soit utilisé comme conteneur pour la réception et la contention de liquides, soit dans le cas ou le corps creux constitue un engin flottant devant être étanche à toute pénétration d'eau.

On comprend ainsi qu'en cas de dommage causé à un des éléments composant le liston d'une embarcation, il ne sera pas nécessaire, comme dans le cadre de l'art antérieur, de remplacer l'ensemble du liston, seul l'élément atteint et affecté doit être déposé et remplacé par un élément identique ; ce dernier n'aura d'ailleurs pas besoin d'être nécessairement retenu en stock ; l'élément peut en effet être rapidement fabriqué en quelques heures à partir du moule.

En fonction des particularités et spécificités de chaque modèle de bateaux, de leur dimension et de l'esthétique désirée par l'architecte ou le constructeur, on peut prévoir lors de la réalisation des modalités adaptées :
- les lèvres et échancrures peuvent être positionnées plus ou moins haut selon le niveau de la liaison désirée, en adoptant des coupes de dimensions adaptées à chaque style ou type de bateau.
- la soudure de la liaison des demi-coquilles coque et superstructure peut s'effectuer avec des produits adaptés à la soudure des dites demi-coquilles et au matériau les constituant
- le bourrelet ou liston de protection latérale peut être de couleur adaptée ou de forme appropriée pour être inséré dans la gorge réceptrice tout en présentant en débordement un effet antichoc et une ligne esthétique avantageuse.
- le moulage de chaque pièce peut être obtenu par la combinaison de plusieurs moules ; de même le nombre de moulages devant être assemblés entre eux selon le procédé spécifié, peut être supérieur à deux.
- l'invention est applicable à toutes formes dans l'espace ;
- l'intérieur des demi-coquilles ainsi que l'intérieur du bourrelet ou liston pourraient être remplis par exemple d'un matériau inerte, tel qu'une résine alvéolaire ou expansée à cellules fermées.

Il est encore possible, selon un développement de l'invention, de tirer profit du déport vers l'intérieur du bord terminal des demi coquilles ( en vue de conformer ensemble la gorge précédemment décrite) pour prévoir des évidements sur ce bord, dans la zone repliée ; ces évidements disposés sur les lèvres venant en regard d'une demi coquille à l'autre vont ainsi conformer lors du rapprochement des demi coquilles une ouverture ou regard ; cette ouverture permet, notamment après jonction et solidarisation des demi coquilles l'une sur l'autre, d'accéder à l'espace intérieur du volume constitué par les demi coquilles assemblées.
Cet accès sera utile pour tous travaux de finition ou de réparation impliquant par exemple fixation d'un accessoire ou accastillage, devant trouver appui ou assise (par boulonnage , collage ou autre) sur la face interne de la coque. On évite ainsi les méthodes antérieures impliquant découpage d'une portion de cette coque suivie de la mise en place d'une platine rapportée. L'ouverture située dans le fond de la gorge n'est donc pas visible étant cachée et protégée par le liston comme précédemment décrit, de sorte que les travaux de finition et/ou réparation ci-dessus évoqués le laissent aucune trace et ne sont pas visible après mise ou remise en place du liston.

Cette ouverture peut également constituer une voie d'accès utile en cours de fabrication pour assurer une solidarisation des renforts ou cloisonnements intérieurs et internes à la coque (entre les parois internes des deux demi coquilles) ; ces renforts notamment du type « varangues» seront formés de voiles ou cloisons internes (de préférence en résine armée) disposées verticalement entre les demi coquilles ; elles peuvent être au départ solidarisées au stade de fabrication sur une des deux demi coquilles, par exemple la demi coquille inférieure formant le fond de l'embarcation, la dite paroi ou varangue étant conformée pour venir au contact d'appui sur la paroi interne de l'autre demi coquille ; dans l'état actuel de la technique ce cloisonnement est solidaire (de fabrication ) d'une demi coquille et vient en appui libre sur la paroi interne de la demi coquille opposée. Or la disposition d'ouverture d'accès au niveau de la gorge, comme décrit ci-dessus, permet de mettre en place des éléments de soudure entre le sommet des dites varangues et la paroi de la demi coquille supérieure au niveau du mur de bordure de l'embarcation, par exemple sous forme de mat imprégné de résine. Ainsi la varange interne ne se contente plus de fournir un appui libre sur ce mur interne de bordure, mais fait alors corps avec lui assurant une constitution monolothique de l'ensemble ; ce qui renforce considérablement la structure de l'embarcation, sa résistance aux chocs, aux trépidations ou vibrations.

L'ouverture d'accés disposée dans le fond 7 de la gorge 6 sera refermée par une plaque formant trappe amovible et/ou effaçable, pourvue d'un joint étanche, elle même cachée par le positionnement ultérieur du liston.

Ainsi l'invention permet de façon nouvelle de réaliser des assemblages des demi-coquilles depuis l'extérieur de l'engin dans des conditions optimales d'accessibilité et de confort ; le procédé permet de contrôler au fur et à mesure de l'avancement du travail l'efficacité et la bonne exécution de ce dernier .

## Revendications

1. Procédé pour la fabrication d'engins flottants, du type mettant en oeuvre une solidarisation définitive et étanche d'au moins deux demi-coquilles présentant une face interne et une face externe, notamment en matériau composite tel que résine armée, au moins une demi-coquille constituant la coque (2), au moins une seconde demi-coquille constituant la superstructure (1) de l'engin et le procédé est **caractérisé par** la succession des opérations suivantes : a) on réalise sur chacune des dites demi-coquilles (1, 2), lors de leur mise en forme, à proximité de leurs bords devant venir en contact, un premier repli (4, 4') vers la face interne (1b, 2b), suivi d'un second repli (5, 5') vers une direction opposée au corps de la demi-coquille concernée, la face externe (1a, 2a) de chaque demi-coquille conformant ainsi à proximité de son bord un épaulement ou échancrure en retrait vers l'intérieur, b) on met en contact les lèvres (1d, 2d) définies par les bords des deux demi-coquilles, chaque lèvre d'une demi-coquille venant en contact linéaire avec la lèvre de la demi-coquille opposée, les deux lèvres aboutées conformant une gorge en creux (6) s'ouvrant sur les faces externes des demi-coquilles et suivant le plan de joint commun aux deux demi-coquilles, c) on rapporte sur les deux lèvres (1d, 2d) juxtaposées et constituant le fond (7) de la dite gorge (6) un bandeau de tissu d'armature imprégné de résine (8) soumise à polymérisation in situ pour assurer la solidarisation des deux éléments par leurs lèvres aboutées ; d) on insère dans la dite gorge un corps longiforme (10) de section complémentaire de la dite gorge pour former un boudin de remplissage solidarisé dans sa gorge réceptrice.

2. Procédé selon la revendication 1 et **caractérisé en ce que** l'échancrure pratiquée sur les bords respectifs de chacune des demi-coquilles devant venir en contact sont conformés de telle sorte que les lèvres terminales soient en contact coplanaire, les deux lèvres (1d, 2d) se situant dans un même plan définissant le fond (7) de la gorge (6).

3. Procédé selon la revendication 2, **caractérisé en ce que** les dits premier (4, 4') et second (5, 5') replis effectués sur les bords des deux demi-coquilles à solidariser sont à angle droit, la gorge (6) définie par la juxtaposition des lèvres terminales des deux demi-coquilles ayant ainsi la forme d'un U sensiblement rectangulaire ouvert vers la face externe des demi-coquilles assemblées.

4. Procédé selon la revendication 1 et **caractérisé en ce que** 1' on dispose à proximité de la lèvre d'une des deux demi-coquilles et sur la face interne (2d) de cette dernière au moins une cale (3) débordant au-dessus de la lèvre terminale, cette cale étant apte à recevoir la face interne (1d) de la lèvre de l'autre demi-coquille et à l'immobiliser dans sa position de jonction correcte.

5. Procédé selon la revendication 1 et **caractérisé en ce que** préalablement à la phase c) ci-dessus de mise en place du bandeau de stratification sur place, on procède à une préparation de surface du fond (7) de la gorge (6), notamment par ponçage, par mise en place d'une ponceuse à bande engagée dans la gorge, la bande de ponçage reposant sur le fond de la dite gorge préalablement amenée en position sensiblement horizontale, les deux bords latéraux de la gorge (1c, 2c), alors en position verticale, définissant des rails ou glissières de guidage de déplacement de la bande.

6. Procédé selon la revendication 1 et **caractérisé en ce que** le bandeau d'armature (8) est formé d'un tissu tissé à maille carré, présentant une résistance bidirectionnelle.

7. Procédé selon la revendication 1 et **caractérisé en ce que** le corps longiforme (10) inséré dans la gorge (6) est lui-même réalisé en résine armée.

8. Produit industriel nouveau obtenu par la mise en oeuvre du procédé selon l'une des revendications 1 à 7 et constituant un engin flottant **caractérisé en ce qu'**il est formé de deux demi-coquilles (1, 2) assemblées par leur plan de joint, les lèvres formées par les bords aboutés des deux demi-coquilles comportant chacune une échancrure (4 et 5, 4' et 5') à proximité du plan de joint, la dite échancrure étant obtenue par repli de la feuille constituant le bord de chaque demi-coquille vers l'intérieur de la structure de l'engin flottant suivi d'un second repli orientant le dit bord en direction du bord de la demi-coquille opposée, les lèvres respectives (1d, 2d) en regard formées par les bords des deux demi-coquilles étant aboutées, les échancrures jumelées des deux demi-coquilles définissant ensemble une gorge (6) qui ceinture l'engin flottant, le plan de joint se situant dans le fond de la dite gorge, et les dites lèvres conformant ensemble le fond (7) de la gorge (6) sont solidarisées par un bandeau de résine armée (8) stratifié sur le fond de la dite gorge.

9. Engin flottant selon la revendication 8 et **caractérisé en ce que** la gorge (6) contient un corps longiforme (10) conformant bourrelet et de section complémentaire de la dite gorge, le corps venant en outre en débordement par rapport au bordé de l'engin flottant en constituant un liston de décoration et de protection contre les chocs, ce liston étant notamment formé d'une pluralité d'éléments longiformes juxtaposés bout à bout et individuellement amovibles

10. Engin flottant selon la revendication 8 et **caractérisé en ce que** le fond (7) de la gorge (6) comporte au moins une et de préférence une pluralité d'ouvertures d'accès au volume intérieur, chaque ouverture étant refermée par une plaque ou trappe avec joint d'étanchéité.
